# EUROPEAN PATENT SPECIFICATION

(11) **EP 3 199 318 B1**
(45) Date of publication and mention of the grant of the patent: **22.08.2018**
(21) Application number: 16384001.0
(22) Date of filing: 10.06.2016
(51) Int. Cl.: B29B 17/02, B29B 17/04, B29K 67/00

(54) **METHOD FOR RECOVERING PLASTIC FROM COMPLEX MATERIALS**
VERFAHREN ZUR RÜCKGEWINNUNG VON KUNSTSTOFF AUS KOMPLEXEN MATERIALIEN
PROCÉDÉ POUR RÉCUPÉRER DU PLASTIQUE À PARTIR DE MATÉRIAUX COMPLEXES

(30) Priority: 28.01.2016 ES 201600083
(43) Date of publication of application: 02.08.2017
(73) Proprietor: Riera Berenguer, Francisco, 08470 Sant Celoni (Barcelona) (ES); Bonjoch, Adela Cantón, 08470 Sant Celoni (Barcelona) (ES)
(72) Inventor: Riera Berenguer, Francisco, 08470 Sant Celoni (Barcelona) (ES); Bonjoch, Adela Cantón, 08470 Sant Celoni (Barcelona) (ES)
(74) Representative: Gallego Jiménez, José Fernando

(56) References cited:
- EP-A1- 1 868 786
- EP-A1- 1 923 189

## Description

### Object of the invention

The object of the present invention is a method for recovering plastic from complex materials, such complex materials being constituted from reinforced plastic with threads or layers of other material, for example polyester.

This method has some constructive particularities aimed at achieving an almost total elimination of the fibres incorporated in the complex material and recovering the plastic material with a purity of 99.99%.

### Technical field of the invention

This invention is applicable to the recovery of plastics from waste or offcuts of complex materials.

### State of the art

In the patent for invention ES 2277574 of the same applicant, a method for the utilisation of waste compound plastic materials is described, whose aim is the recovery of offcuts resulting from cutting and handling processes of compound plastic materials consisting, essentially, of layers of a synthetic plastic like polyester and another synthetic plastic such as polyvinylchloride (PVC) for their use in manufacturing different pieces.

The method described in said method comprises: a first grinding phase of the compound material, reducing it to fragments of a size of approximately 12 to 8 millimetres; a second grinding phase in which it is reduced to fragments of 1 to 5 millimetres; the passage of the ground granules through a rotating drum for converting the polyester into balls of a larger size than the plastic fragments; a first and a second sifting to separate the polyester fluff and the conveyance of the plastic with a lower proportion of fluff into a hopper; homogenizing the product in a silo whose input is fed by the hopper mentioned above and which provides an output of a uniform mixture of plastic and fluff and an output of thread waste to be sent to a general container and, finally, a third sifting for treating the outgoing mixture from the homogenizing silo in order to separate the residual traces of fluff and finally obtain the plastic component.

Such method, although achieving a significant removal of the polyester fluff contained in the complex material, has the disadvantage that the plastic material recovered still contains an amount of polyester which prevents the use of the recycled plastic as raw material for certain applications, for example the manufacture of waterproof sheets, as residues in powder form contained in the plastic material cause pores in the impermeable sheet.

Other known background that has less in common with the object of the present invention are the methods of separating plastic material, separating the fibres by chemical process.

These chemical treatments cause a degradation of the plastic material, which limits its subsequent use in certain applications, such as the manufacture of waterproof plastic sheets.

In addition, it must be taken into consideration that these chemical processes are, in the main, more expensive because of the need to treat the waste of the chemical products used to prevent environmental problems.

Therefore, the technical problem posed is the development of a method for recovering plastic from complex materials, which allows obtaining plastic of a very high purity so that the recovered plastic can be used as raw material for the manufacture of various products, including waterproof plastic sheets.

### Description of the invention

According to the invention, the method for recovering plastic, object of the invention, has constructive particularities aimed at achieving the objectives, namely the recovery of plastic with a purity of 99.99%, which allows its use as raw material for the manufacture of various plastic products.

According to the invention, this method comprises the following steps:
a) a first grinding of the complex product into granules of 8 to 12 millimetres in a mill with aspiration;
b) a first grouping into balls of the polyester fluff contained in the product obtained from the first grinding, in a drum with aspiration,
c) a first separation of the polyester balls and the remaining mixture of plastic with polyester in a first sifting with aspiration;
d) a second grinding of the remaining mixture into granules of 4 to 6 millimetres in a mill with aspiration;
e) accumulating and dosing the product from the second grinding by means of a of a metering hopper with aspiration;
f) a second grouping into balls, in a drum with aspiration, of the polyester fluff contained in the product obtained from the second grinding;
g) a second separation of the polyester balls and the remaining mixture of plastic with polyester in a second sifting with aspiration;
h) a third grinding of the remaining mixture into granules of a size equal to or smaller than 2 millimetres, in a mill with aspiration;
i) a third grouping into balls of the polyester fluff contained in the product obtained from the second grinding, in a drum with aspiration,
j) a separation by aspiration of the suspended dust contained in the product obtained from the second grinding in a hopper;
k) a third separation of the polyester balls and the remaining mixture of plastic with polyester in a third sifting with aspiration;
l) removing the polyester fluff contained in the remaining mixture of plastic with polyester from the third separation by successive agitation of said remaining mixture and respective removals of the polyester fluff by sifting, aspiration, blowing and/or propulsion, until a plastic purity of 99.99% is obtained.

Preferably, the grinding of the product indicated in steps a), d) and h) are carried out in respective aspiration mills allowing removal of suspended dust particles or polyester fluff to exterior accumulation tanks.

The grouping into balls of the polyester fluff released after each grinding is preferably performed in respective drums with aspiration, which, as in the previous case, propel the suspended dust and fluff particles into exterior accumulation tanks.

The separation of the polyester balls formed in the product after each grinding are separated from the remaining product mixture in respective sifters with aspiration, responsible for the removal of the suspended dust or polyester fluff to the exterior tanks mentioned above.

As indicated in step e) once the second grinding of the mixture is performed the resulting product is accumulated and metered by a metering hopper with aspiration allowing the product to be dosed at a variable speed to the third grinding ensuring that granules of a size equal to or less than 2 millimetres are obtained.

The separation by aspiration of the suspended dust contained in the product obtained from the second grinding and mentioned in step j) is preferably performed in a hopper with aspiration so that the product being released in its interior falls down to the lower area, the suspended dust being removed by the aspiration applied in said hopper.

These and other features of the invention contained in the appended claims will become better understood in view of an exemplary embodiment of the invention shown in the attached figures.

### Description of the figures

In order to complement the description that is being carried out and with the purpose of facilitating the understanding of the characteristics of the invention, the present description is accompanied by a set of drawings wherein, by way of a non-limiting example, the following has been represented:

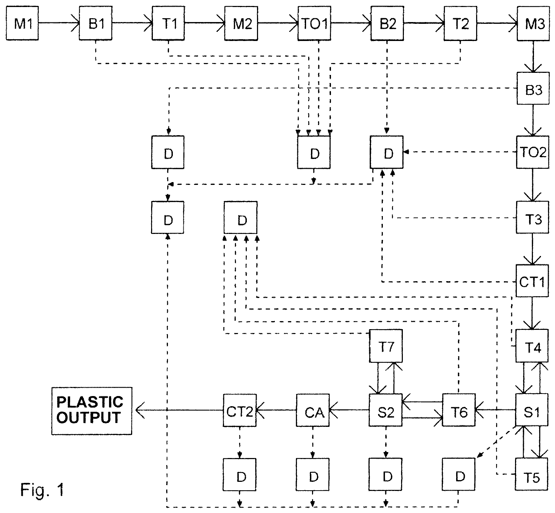

- Figure 1 shows a diagram of the method for recovering plastic from complex materials, according to the invention, in which the elements used in each of these phases are schematically shown.

### Preferred embodiment of the invention

Firstly, a first grinding of the complex product into granules of 8 to 12 millimetres is performed, using in this case a mill (M1) with aspiration.

Then, a first grouping into balls of the polyester fluff contained in the product obtained from the first grinding is performed, performing said grouping in an aspiration drum (B1). Then, a first separation of the polyester balls formed in the drum (B1) is performed by a first sifter (T1) with aspiration, the remaining mixture of plastic with polyester passing to a mill (M2) with aspiration in which a second grinding of the remaining mixture into granules of a size between 4 to 6 millimetres is performed.

The product from the second grinding in the mill (M2) is accumulated in a metering hopper (TO1) with aspiration, then a second grouping into balls of the polyester fluff contained in the product obtained from said second grinding being performed in the drum (B2) with aspiration.

These polyester balls are separated from the remaining mixture of plastic with polyester in a second sifter (T2) with aspiration.

Subsequently, the remaining mixture is subjected to a third grinding in a mill (M3) with aspiration to obtain granules of a size equal to or less than 2 millimetres.

Then a third grouping into balls of the polyester fluff contained in the product obtained from the third grinding is performed, said grouping into balls being carried out in a drum (B3) with aspiration.

The product obtained from the third grinding is subjected to a separation by aspiration of the suspended dust contained therein, this separation being performed in a hopper (TO2).

Subsequently, in a third sifter (T3) with aspiration, a third separation of the polyester balls and the remaining mixture of polyester plastic from said third grinding is performed.

As can be seen in the accompanying diagram, the use of mills, drums, hoppers and sifters with aspiration allows performing, in each phase, the removal of suspended fluff particles into exterior accumulation tanks (D) of fluff.

The remaining mixture of plastic with polyester obtained from the third sifter (T3) is subsequently subjected to successive agitations and respective removals of the polyester fluff by sifting, aspiration, blowing and/or propulsion, until a plastic is obtained with a purity of 99.99%.

Specifically, in the example shown in Figure 1, such agitations and removals of the fluff comprise the following steps:
- agitating said product mixture in a cyclone separator (CT1)
- recirculating it through a first storage silo (S1) with aspiration and with an endless agitator of the product; and through sifters (T4, T5), which separate the fluff balls formed in the endless agitator of the said storage silo (S1) from the remaining mixture of plastic and fluff;
- subsequently, recirculating it through a second storage silo (S2) with aspiration and an endless agitator of the product and through sifters (T6, T7), which separate the fluff balls formed in the endless agitator of said second storage silo (S2) from the remaining mixture of plastic and fluff;
- then, pouring the remaining mixture of the product mixture, in the form of curtain, into an air box (CA), which removes the fluff to an exterior tank, and
- finally, removing any possible traces of fluff by passing the product through a cyclone separator (CT2) which provides the recovered plastic with a purity of 99.99%.

## Claims

1. A method for recovering plastic from complex materials; comprising, at least, the following phases:
a) a first grinding of the complex product into granules of 8 to 12 millimetres in a mill (M1) with aspiration;
b) a first grouping into balls of the polyester fluff contained in the product obtained from the first grinding, in a drum (B1) with aspiration,
c) a first separation of the polyester balls and the remaining mixture of plastic with polyester in a first sifter (T1) with aspiration;
d) a second grinding of the remaining mixture into granules of 4 to 6 millimetres in a mill (M2) with aspiration;
e) accumulating and dosing the product from the second grinding by means of a metering hopper (TO1) with aspiration;
f) a second grouping into balls, in a drum (B2) with aspiration, of the polyester fluff contained in the product obtained from the second grinding;
g) a second separation of the polyester balls and the remaining mixture of plastic with polyester in a second sifter (T2) with aspiration;
h) a third grinding of the remaining mixture into granules of a size equal to or smaller than 2 millimetres, in a mill (M3) with aspiration;
i) a third grouping into balls of the polyester fluff contained in the product obtained from the third grinding in a drum (B3) with aspiration,
j) a separation by aspiration of the suspended dust contained in the product obtained from the third grinding in a hopper (TO2);
k) a third separation of the polyester balls and the remaining mixture of plastic with polyester in a third sifter (T3) with aspiration;
l) removing the polyester fluff contained in the remaining mixture of plastic with polyester from the third separation by successive agitation of said remaining mixture and respective removal of the polyester fluff by sifting, aspiration, blowing and/or propulsion, until a plastic purity of 99.99% is obtained.

2. The method, according to Claim 1, **characterised in that** in the steps a) - j) a removal by aspiration of the suspended dust fluff into accumulation tanks (D) is performed.

3. The method, according to Claim 1, **characterised in that** the removal I) of the polyester fluff contained in the remaining mixture of plastic with polyester from the third separation, comprises the following steps:
- agitating the product mixture in a cyclone separator (CT1);
- recirculating the product through a first storage silo (S1) with aspiration and with an endless agitator and through sifters (T4, T5), which separate the fluff balls formed in the endless agitator from the remaining mixture of plastic and fluff;
- recirculating the product through a second storage silo (S2) with aspiration and with an endless agitator and through sifters (T6, T7), which separate the fluff balls formed in the endless agitator from the remaining mixture of plastic and fluff;
- pouring the remaining mixture of the product, in the form of curtain, into an air box (CA), which removes the fluff, and
- removing any possible traces of fluff by passing the product through a cyclone separator (CT2), which provides the recovered plastic with a purity of 99.99%.

## Patentansprüche

1. Verfahren zur Rückgewinnung von Kunststoff aus komplexen Materialien, das mindestens die folgenden Phasen umfasst:
a) ein erstes Mahlen des komplexen Produkts in Granulat von 8 bis 12 Millimetern in einer Mühle (M1) mit Aspiration;
b) ein erstes Gruppieren in Kugeln der Polyesterflocken, die in dem Produkt enthalten sind, das aus dem ersten Mahlen erhalten wurde, in einer Trommel (B1) mit Aspiration,
c) eine erste Abscheidung der Polyesterkugeln und der verbleibenden Mischung aus Kunststoff mit Polyester in einem ersten Sieb (T1) mit Aspiration;
d) ein zweites Mahlen der verbleibenden Mischung in Granulat von 4 bis 6 Millimetern in einer Mühle (M2) mit Aspiration;
e) Ansammeln und Dosieren des Produkts aus dem zweiten Mahlen mittels eines Dosierbunkers (TO1) mit Aspiration;
f) ein zweites Gruppieren in Kugeln der Polyesterflocken, die in dem Produkt enthalten sind, das aus dem zweiten Mahlen erhalten wurde, in einer Trommel (B2) mit Aspiration;
g) eine zweite Abscheidung der Polyesterkugeln und der verbleibenden Mischung aus Kunststoff mit Polyester in einem zweiten Sieb (T2) mit Aspiration;
h) ein drittes Mahlen der verbleibenden Mischung in Granulat einer Größe, die gleich oder kleiner ist als 2 Millimeter, in einer Mühle (M3) mit Aspiration;
i) ein drittes Gruppieren in Kugeln der Polyesterflocken, die in dem Produkt enthalten sind, das aus dem dritten Mahlen in einer Trommel (B3) mit Aspiration erhalten wurde,
j) eine Abscheidung durch Aspiration des suspendierten Staubs, der in dem Produkt enthalten ist, das aus dem dritten Mahlen in einem Dosierbunker (T02) erhalten ist;
k) eine dritte Abscheidung der Polyesterkugeln und der verbleibenden Mischung aus Kunststoff mit Polyester in einem dritten Sieb (T3) mit Aspiration;
l) Entfernen der Polyesterflocken, die in der verbleibenden Mischung aus Kunststoff enthalten sind, mit Polyester aus der dritten Abscheidung durch aufeinanderfolgendes Umrühren der verbleibenden Mischung und entsprechendes Entfernen der Polyesterflocken durch Sieben, Aspiration, Blasen und/oder Vortrieb, bis eine Kunststoffreinheit von 99,99 % erhalten ist.

2. Verfahren nach Anspruch 1, **dadurch gekennzeichnet, dass** in den Schritten a)-j) ein Entfernen durch Aspiration der suspendierten Staubflocken in Sammelbehälter (D) durchgeführt ist.

3. Verfahren nach Anspruch 1, **dadurch gekennzeichnet, dass** das Entfernen 1) der Polyesterflocken, die in der verbleibenden Mischung aus Kunststoff mit Polyester enthalten sind, aus der dritten Abscheidung die folgenden Schritte umfasst:
- Rühren der Produktmischung in einem Zyklonabscheider (CT1);
- Rückführen des Produkts durch ein erstes Lagersilo (S1) mit Aspiration und mit einem Endlosrührwerk und durch Siebe (T4, T5), welche die Flockenkugeln, die sich in dem Endlosrührwerk aus der verbleibenden Mischung aus Kunststoff und Flocken gebildet haben, trennen;
- Rückführen des Produkts durch ein zweites Lagersilo (S2) mit Aspiration und mit einem Endlosrührwerk und durch Siebe (T6, T7), welche die Flockenkugeln, die sich in dem Endlosrührwerk aus der verbleibenden Mischung aus Kunststoff und Flocken gebildet haben, trennen,
- Schütten der verbleibenden Mischung des Produkts in der Vorhangform in einen Luftkasten (CA), was die Flocken entfernt, und
- Entfernen von allen möglichen Spuren von Flocken durch Strömen des Produkts durch einen Zyklonabscheider (CT2), der den rückgewonnenen Kunststoff mit einer Reinheit von 99,99 % bereitstellt.

## Revendications

1. Procédé pour récupérer du plastique à partir de matériaux complexes ; comprenant, au moins, les phases suivantes :
a) un premier broyage du produit complexe en granules de 8 à 12 millimètres dans un broyeur (M1) avec aspiration ;
b) un premier groupement en billes de la peluche de polyester contenue dans le produit obtenu à partir du premier broyage, dans un tambour (B1) avec aspiration,
c) une première séparation des billes de polyester et du mélange restant de plastique avec du polyester dans un premier tamis (T1) avec aspiration ;
d) un deuxième broyage du mélange restant en granules de 4 à 6 millimètres dans un broyeur (M2) avec aspiration ;
e) l'accumulation et le dosage du produit du deuxième broyage au moyen d'une trémie de dosage (TO1) avec aspiration ;
f) un deuxième groupement en billes, dans un tambour (B2) avec aspiration, de la peluche de polyester contenue dans le produit obtenu à partir du deuxième broyage ;
g) une deuxième séparation des billes de polyester et du mélange restant de plastique avec du polyester dans un deuxième tamis (T2) avec aspiration ;
h) un troisième broyage du mélange restant en granules d'une taille égale ou inférieure à 2 millimètres, dans un broyeur (M3) avec aspiration ;
i) un troisième groupement en billes de la peluche de polyester contenue dans le produit obtenu à partir du troisième broyage dans un tambour (B3) avec aspiration,
j) une séparation par aspiration de la poussière suspendue contenue dans le produit obtenu à partir du troisième broyage dans une trémie (T02) ;
k) une troisième séparation de billes de polyester et du mélange restant de plastique avec du polyester dans un troisième tamis (T3) avec aspiration ;
l) le retrait de la peluche de polyester contenue dans le mélange restant de plastique avec polyester depuis la troisième séparation par agitation successive dudit mélange restant et le retrait respectif de la peluche de polyester par tamisage, aspiration, soufflage et/ou propulsion jusqu'à ce qu'une pureté plastique de 99,99 % soit obtenue.

2. Procédé selon la revendication 1, **caractérisé en ce que** dans les étapes a) à j) un retrait par aspiration de la poussière suspendue de la peluche dans des réservoirs d'accumulation (D) est réalisé.

3. Procédé selon la revendication 1, **caractérisé en ce que** le retrait 1) de la peluche de polyester contenue dans le mélange restant de plastique avec du polyester de la troisième séparation, comprend les étapes suivantes :
- l'agitation du mélange de produit dans un séparateur cyclone (CT1) ;
- la recirculation du produit au travers d'un premier silo de stockage (S1) avec aspiration et avec un agitateur sans fin et au travers de tamis (T4, T5) qui séparent les billes de peluche formées dans l'agitateur sans fin du mélange restant de plastique et de peluche ;
- la recirculation du produit au travers d'un second silo de stockage (S2) avec aspiration et avec un agitateur sans fin et au travers de tamis (T6, T7) qui séparent les billes de peluche formées dans l'agitateur sans fin du mélange restant de plastique et de peluche ;
- le versement du mélange restant du produit, sous la forme d'un rideau, dans un réservoir d'air (CA) qui retire la peluche, et
- le retrait de toute trace possible de peluche en faisant passer le produit au travers d'un séparateur cyclone (CT2) qui fournit le plastique récupéré avec une pureté de 99,99 %.
